Europäisches Patentamt

European Patent Office

Office européen des brevets

(11) Numéro de publication: **0 285 494**
**A1**

## (12) DEMANDE DE BREVET EUROPEEN

(21) Numéro de dépôt: 88400671.9

(22) Date de dépôt: 21.03.88

(51) Int. Cl.⁴: **H 04 N 9/75**

(30) Priorité: 25.03.87 FR 8704164

(43) Date de publication de la demande:
05.10.88 Bulletin 88/40

(84) Etats contractants désignés: **DE GB NL**

(71) Demandeur: **TELEDIFFUSION DE FRANCE**
**10, rue d'Oradour sur Glane**
**F-75932 Paris Cédex 15 (FR)**

(72) Inventeur: **Macheboeuf, Guy**
**Val d'Haumont 37, Allée des Pins**
**F-27130 Pullay par Verneuil sur Avre (FR)**

(74) Mandataire: **Martinet & Lapoux**
**62, rue des Mathurins**
**F-75008 Paris (FR)**

(54) **Dispositif de décoloration de fond pour système d'incrustation d'images de télévision en couleurs.**

(57) Le dispositif de décoloration est inséré dans trois voies d'entrée d'un système d'incrustation transmettant des signaux de luminance (Y) et de chrominance (CR, CB) d'une image composite d'avant-scène et de fond, avant incrustation proprement dite de l'image d'avant-scène dans une image d'arrière-scène, afin que la couleur du fond n'apparaisse plus notamment dans des zones transparentes de l'image d'avant-scène après incrustation. Selon une réalisation, le dispositif produit un troisième signal de chrominance (CB') égal à la valeur absolue d'un premier signal de chrominance (CR) lorsqu'un second signal de chrominance (CB) associé à la couleur du fond, est supérieur à la valeur absolue du premier signal de chrominance (CR), et égal au second signal de chrominance (CB) lorsque celui-ci est inférieur ou égal à la valeur absolue du premier signal de chrominance (CR). Selon une autre réalisation, le dispositif décolore complètement le fond, en tenant compte précisément des relations liant directement les signaux de luminance et de chrominance.

FIG.2

EP 0 285 494 A1

## Description

Dispositif de décoloration de fond pour système d'incrustation d'images de télévision en couleurs

La présente invention concerne d'une manière générale, des techniques visant à améliorer la qualité d'une image de télévision en couleurs résultant de l'incrustation d'une image d'avant-scène, telle que personnage ou sujet, filmé devant un fond généralement bleu, dans une image d'arrière-scène, telle que décor. La couleur bleue du fond est choisie parce qu'elle permet de ne prendre qu'un minimum de précautions pour l'éclairage du fond et de l'avant-scène, et parce qu'elle est très différente des couleurs de l'avant-scène, telle que la couleur "chair" pour un personnage.

Plus particulièrement l'invention a trait à l'incrustation de contours flous, reflets et halos bleutés de l'image d'avant-scène succeptibles d'apparaître dans l'image résultante. Ces flous bleutés apparaissent principalement dans des zones transitoires entre le fond et l'image d'avant-scène, notamment lors que cette dernière comporte des zones transparentes telles que chevaux ébouriffés, objets en verre, etc...

Afin de minimiser le bleuté de ces flous, il est connu d'utiliser un dispositif de décoloration de fond qui traite l'image composite composée par l'avant-scène et le fond, avant l'incrustation proprement dite de l'image d'avant-scène dans l'image d'arrière-scène. Ce traitement atténue, voire supprime la couleur dominante bleue du fond dans l'image composite afin que cette couleur inopportune n'apparaisse plus dans les zones transparentes de l'image d'avant-scène avant l'incrustation.

De tels dispositifs de décoloration connus opèrent sur des signaux composants primaires associés aux couleurs rouge, bleue et verte de l'image composite, comme divulgué par l'article de l'inventeur, Guy MACHEBOEUF, intitulé "Evolution et progrès de l'incrustation en télévision en couleur", publié par la revue "Radiodiffusion -Télévision", n° 83, juin 1984, Paris, notamment page 7.

Cependant, il s'avère, par exemple en studio de télévision, que les signaux d'images à traiter soient des signaux vidéo de luminance et de chrominance. Dans ce cas, comme on le verra dans la suite, de simples comparaisons de la composante primaire bleue correspondant au fond avec les deux autres composantes primaires, rouge et verte, ne peuvent être plus mises en oeuvre, en raison de relations liant les signaux de luminance et de chrominance.

La présente invention vise ainsi à répondre à ce besoin en fournissant un dispositif de décoloration de fond recevant des premier et second signaux de chrominance correspondant à une image composite constituée par une image d'avant-scène évoluant devant un fond dont la couleur prépondérante, par exemple bleue, est associée au second signal de chrominance.

A cette fin, ce dispositif de décoloration de fond est caractérisé en ce qu'il comprend des moyens pour produire un troisième signal de chrominance égal à la valeur absolue du premier signal de chrominance lorsque le second signal de chrominance est supérieur à la valeur absolue du premier signal de chrominance, et égal au second signal de chrominance lorsque le second signal de chrominance est inférieur ou égal à la valeur absolue du premier signal de chrominance.

Le dispositif défini ci-dessus ne décolore que partiellement le fond dans l'image composite, c'est-à-dire le bleu du fond est transformé en une couleur atténuée telle que bleu cyan, et les couleurs de l'image d'avant-scène proches du bleu, telles que magenta et cyan, sont encore contaminées par le bleu du fond. Ceci est dû au fait, selon cette première réalisation, que le premier signal de chrominance est comparé directement au second signal de chrominance et à son opposé, sans tenir compte des relations liant directement ces signaux de chrominance avec le signal de luminance de l'image composite.

Afin d'obtenir une décoloration complète du bleu dans l'image composite, principalement lorsque le fond est d'une couleur bleue saturée, l'invention prévoit une seconde réalisation qui tient compte des relations colorimétriques liant les signaux de chrominance et le signal de luminance en fonction des trois composantes primaires rouge, verte et bleue, afin d'annuler la composante primaire bleue du fond.

Selon cette seconde réalisation, un dispositif de décoloration est caractérisé en ce qu'il comprend des moyens pour produire un troisième signal de chrominance égal au premier signal de chrominance lorsqu'à la fois le premier signal de chrominance est inférieur au second signal de chrominance et supérieur à l'opposé de la moitié d'une tension prédéterminée positive, et égal à l'opposé de la somme du premier signal de chrominance et de la tension prédéterminée lorsqu'à la fois le premier signal de chrominance est supérieur à l'opposé de la somme du second signal de chrominance et de la tension prédéterminée et inférieure à l'opposé de la moitié de la tension prédéterminée, et égal au second signal de chrominance lorsque le premier signal de chrominance est supérieur au second signal de chrominance et/ou est inférieur à l'opposé de la somme du second signal de chrominance et de la tension prédéterminée.

D'autres avantages et caractéristiques de l'invention apparaîtront plus clairement à la lecture de la description suivante de plusieurs réalisations préférées de l'invention en référence aux dessins annexés correspondants dans lesquels :

- la Fig. 1 est un bloc-diagramme schématique d'un système d'incrustation d'images de télévision en couleurs pour signaux de luminance et de chrominance dans lequel est inséré un dispositif de décoloration de fond selon l'invention ;

- la Fig. 2 est un bloc-diagramme schématique d'un dispositif de décoloration de fond selon une première réalisation ;

- les Figs. 3A, 3B, 3C et 3D montrent quatre quadrants du repère plan chromatique à luminance nulle , destinés à l'explication du fonctionnement du dispositif montré à la Fig. 2 ;

- la Fig. 4 montre l'ensemble des zones de couleur dans le repère plan chromatique, décoloré par le dispositif montré à la Fig. 2 ;

- les Figs. 5A, 5B, 5C et 5D montrent quatre quadrants du repère plan chromatique destinés à l'explication du fonctionnement d'un dispositif de décoloration totale de fond selon une seconde réalisation ;

- la Fig. 6 montre l'ensemble des zones de couleur dans le repère plan chromatique, décoloré par le dispositif selon la seconde réalisation ; et

- la Fig. 7 est un bloc-diagramme détaillé du dispositif de décoloration de fond selon la seconde réalisation.

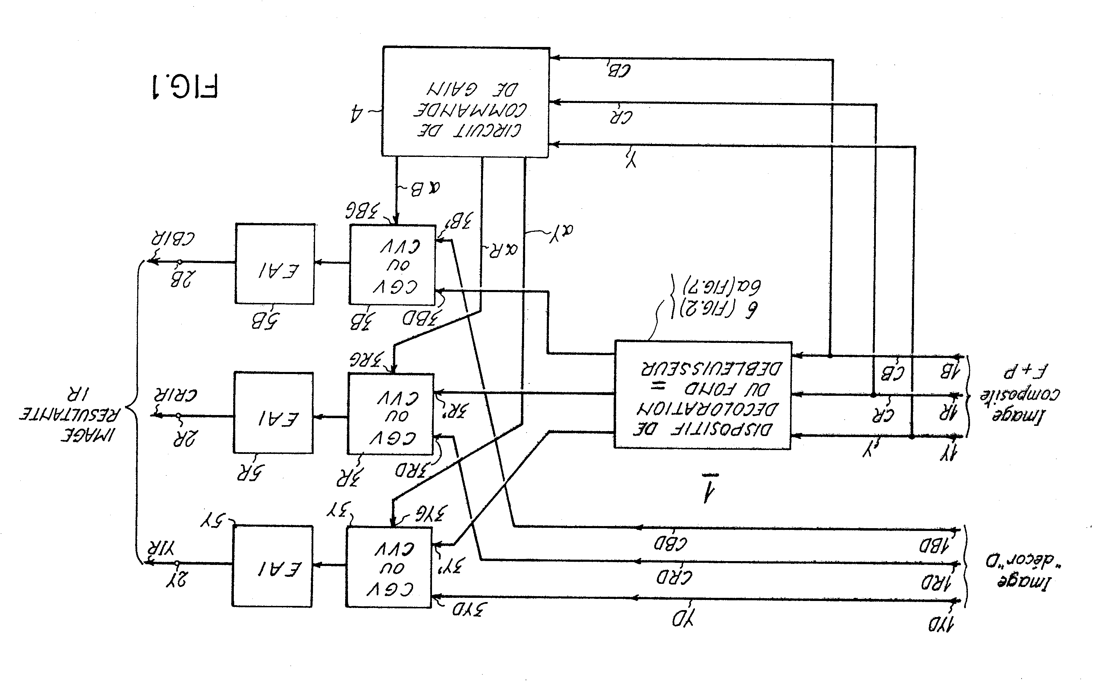

Dans la Fig. 1, on reconnaît la structure générale d'un système d'incrustation d'images en télévision en couleurs 1. Dans ce système, une image de télévision est représentée par trois signaux composants analogiques transmis en parallèle, à savoir un signal de luminance et deux signaux de chrominance, dits également signaux de différence de couleurs, relatifs aux deux couleurs primaires rouge et bleue.

Des premières bornes d'entrée 1Y, 1R et 1B du système 1 reçoivent respectivement un signal de luminance Y et deux signaux de chrominance rouge et bleue CR et CB représentant une image composite en couleurs F + P et transmis par une première source vidéo. L'image composite est constituée par une avant-scène, telle qu'un sujet ou personnage P, filmée devant un fond sensiblement monochrome F, qui est généralement bleu. Comme déjà dit, un fond bleu est choisi en raison de sa couleur très différente de celle, couleur "chair", du visage d'un personnage. Des secondes bornes d'entrée 1YD, 1RD et 1BD reçoivent respectivement un signal de luminance YD et deux signaux de chrominance rouge et bleue CRD et CBD transmis par une seconde source vidéo, et représentant une image en couleurs d'arrière-scène, telle qu'un décor D. Le décor est à substituer au fond F au moyen du système d'incrustation 1. Ainsi à des bornes de sortie 2Y, 2R et 2B du système 1, un signal de luminance YIR et deux signaux de chrominance rouge CRIR et bleue CBIR représentent une image IR résultant de l'incrustation de l'image d'avant-scène P dans l'image d'arrière-scène D.

Comme il est connu, pour obtenir une telle incrustation d'image, le système 1 comprend trois circuits à gain variable (CGV) ou trois circuits à vitesse de commutation variable (CVV) 3Y, 3R et 3B, et un circuit de commande de gain 4. Chacun des circuits 3Y, 3R et 3B a deux entrées 3YD et 3Y', 3RD et 3R', 3BD et 3B' recevant respectivement les deux signaux composants transmis par les deux bornes d'entrée associées 1YD et 1Y, 1RD et 1R, 1BD et 1B, et a une sortie reliée à la borne de sortie associée 2Y, 2R, 2B à travers un étage d'adaptation d'impédance (EAI) 5Y, 5R, 5B. Le circuit de commande 4 reçoit des bornes d'entrée 1Y, 1R et 1B les signaux composants de l'image composite F + P afin de détecter par comparaison à des seuils de tension prédéterminés définissant le domaine trichromatique du fond F, les parties de l'image composite F + P appartenant au fond et appartenant à l'image d'avant-scène P. Pour chacun des signaux composants Y, CR et CB, de telles comparaisons sont effectuées dans le circuit 4 qui produit trois signaux analogiques de commande d'incrustation αY, αR et αB respectivement appliqués à des entrées de commande de gain 3YG, 3RG et 3BG des circuits 3Y, 3R et 3B. Lorsque le signal de commande αY, αR, αB est à un niveau de tension élevé prédéterminé, égal en pratique à l'unité, correspondant à une détection du fond dans le signal composant associé Y, CR, CB, le signal respectif YD, CRD, CBD est retransmis vers la borne de sortie correspondante 2Y, 2R, 2B afin que l'image d'arrière-scène remplace le fond. Lorsque le signal de commande αY, αR et αB est à un niveau de tension faible prédéterminée, égal en pratique à zéro, correspondant à une détection de l'image d'avant-scène dans le signal composant associé Y, CR, CB, le signal respectif Y, CR, CB est retransmis vers la borne de sortie correspondante 2Y, 2R, 2B afin que l'image d'avant-scène soit incrustée dans l'image d'arrière-scène.

Selon l'invention, un dispositif de décoloration du fond 5 est inséré entre l'ensemble des trois bornes d'entrée 1Y, 1R et 1B du système d'incrustation 1 et l'ensemble des secondes entrées 3Y', 3R' et 3B' des circuits à gain variable 3Y, 3R et 3B. Le dispositif 6 est destiné à décolorer le fond F dans l'image composite avant l'incrustation de l'image d'avant-scène dans l'image d'arrière-scène. Selon les réalisations préférées, le fond étant bleu, le dispositif 6 est appelé "débleuisseur".

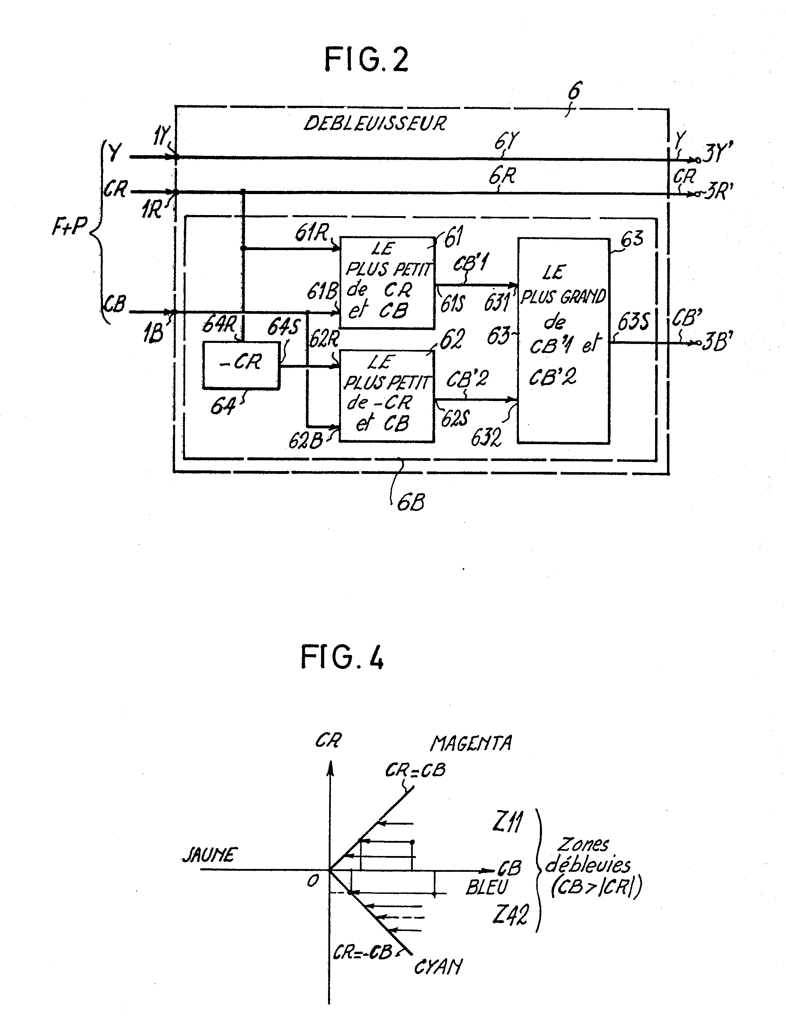

Le débleuisseur 6 est illustré schématiquement sous la forme d'un bloc-diagramme fonctionnel selon une première réalisation montrée à la Fig. 2. Le débleuisseur 6 comprend trois voies transmettant un signal de luminance Y', un premier signal de chrominance CR' associé à la couleur rouge, et un second signal de chrominance CB' associé à la couleur bleue, aux secondes entrées 3Y', 3R' et 3B' des circuits 3Y, 3R et 3B respectivement.

Sachant que le fond est bleu, et en admettant que la couleur bleue ne peut être saturée dans le signal de luminance de l'image composite, le débleuisseur 6 retransmet directement le signal de luminance Y de la borne d'entrée 1Y vers l'entrée 3Y' à travers une première voie filaire 6Y, et le signal de chrominance rouge CR de la borne d'entrée 1R vers l'entrée 3R' à travers une seconde voie filaire 6R.

Le débleuissage proprement dit est accompli dans une troisième voie 6B du débleuisseur dans laquelle le second signal de chrominance CB est comparé au premier signal de chrominance CR et à un signal -CR égal à l'opposé du signal CR afin que le signal de chrominance sortant CB' appliqué à l'entrée 3B' soit toujours inférieur ou égal à la valeur absolue du signal de chrominance CR, et par suite que la couleur bleue ne soit jamais prépondérante dans le signal composite Y = Y', CR' = CR et CB' servant à l'incrustation . Dans ce cas, comme montré à la Fig. 2, la troisième voie 6B comprend trois comparateurs analogiques 61, 62 et 63 et un inverseur analogique 64.

Le premier comparateur 61 a deux entrées 61R et 61B recevant directement les signaux CR et CB transmis par les bornes d'entrée 1R et 1B, et a une sortie 61S retransmettant un premier signal de comparaison CB'1 dont l'amplitude est égale à la plus petite amplitude instantanée des signaux CR et CB. Le premier comparateur 61 ne retransmet le signal CB que si celui-ci est plus petit que le signal CR, sinon le signal CB'1 est égal à CR ; ces conditions sont exprimées par les relations suivantes :

si CB $\leq$ CR alors CB'1 = CB, et

si CB $>$ ; CR alors CB'1 = CR.

Le second comparateur 62 a une première entrée 62R recevant le signal -CR par une sortie 64S de l'inverseur 64 dont une entrée 64R reçoit directement le signal CR par la borne d'entrée 1R, une seconde entrée 62B recevant directement le signal CB par la borne d'entrée 1B, et une sortie 62S retransmettant un second signal de comparaison CB'2 dont l'amplitude est égale à la plus petite amplitude instantanée des signaux -CR et CB. Le second comparateur 62 ne retransmet le signal CB que si celui-ci est plus petit que le signal -CR, sinon le signal CB'2 est égal au signal -CR ; ces conditions sont exprimées par les relations suivantes :

si CB $\leq$ -CR alors CB'2 = CB, et

si CB $>$ ; -CR alors CB'2 = -CR.

Le troisième comparateur 63 a une première entrée 631 reliée à la sortie 61S du premier comparateur, une seconde entrée 632 relie à la sortie 62S du second comparateur, et une sortie 63S reliée à l'entrée 3B' du circuit à gain variable 3B. La sortie 63S retransmet un troisième signal de comparaison CB' dont l'amplitude est égale à la plus grande amplitude instantanée des signaux CB'1 et CB'2, afin que les points images contenant du bleu dans l'image d'avant-scène P soit également reproduit en proportion convenable dans l'image IR résultant de l'incrustation, tout en discernant le bleu du fond, particulièrement dans les régions d'incrustation ou de flou entre le fond et l'image d'avant-scène, régions pour lesquelles des détails du sujet doivent être également reproduits. Le troisième comparateur 63 transmet ainsi un signal CB' tel que :

si CB'1 $\geq$ CB'2 alors CB' = CB'1, et

si CB'1 $\leq$ CB'2 alors CB' = CB'2.

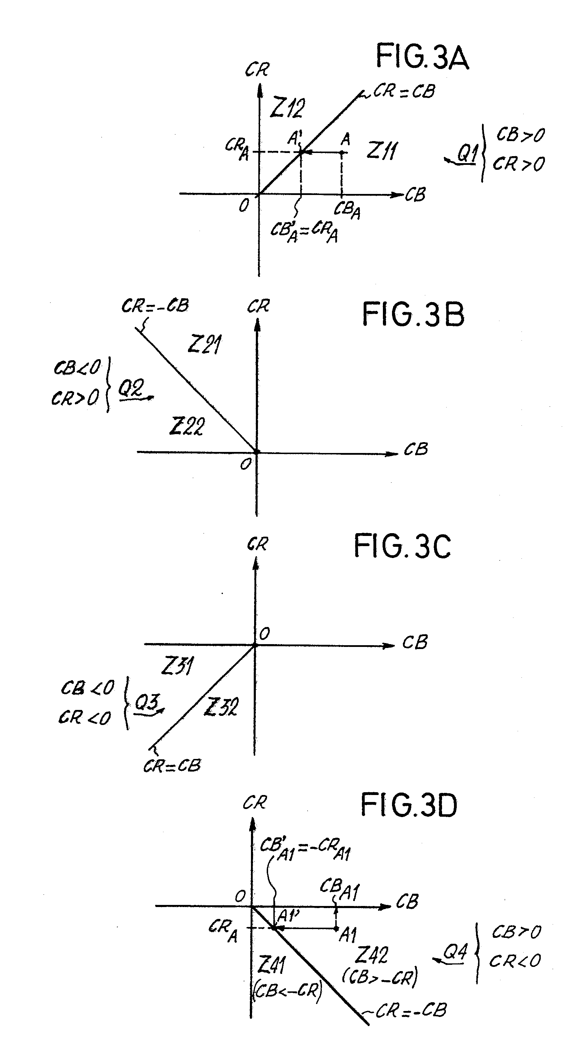

Afin de mieux appréhender le phénomène de débleuissage selon cette première réalisation, celui-ci est commenté ci-après en référence à chacun des quatre quadrants du système de coordonnées de chrominance CR et CB montrés aux Fig. 3A, 3B, 3C et 3D.

Dans le premier quadrant Q1 montré à la Fig. 3A, les signaux CR et CB sont positifs, ce qui implique que CB'2 = -CR, puisque CB $\geq$ 0 $\geq$ -CR. Pour examiner CB'1, le premier quadrant est divisé en deux zones Z11 et Z12 symétriques par rapport à un axe bissecteur défini par CR = CB.

La zone Z11 est définie par CB $\geq$ CR, ce qui implique CB'1 = CR. Dans ce cas CB'1 $>$ ; CB'2, et on a donc CB' = CB'1 = CR. Ainsi un point image A de coordonnées $CB_A$ et $CR_A$ dans la zone Z11 est transformé par le débleuisseur 6 en un point A' de coordonnées CB'$_A$ = $CR_A$ et $CR_A$. Le point image A est débleui et vire au magenta, dit également bleu pourpre.

La zone Z12 est définie par CB $\leq$ CR, ce qui implique CB'1 = CB. Dans ce cas, on a également CB'1 $\geq$ 0 $\geq$ CB'2, et on en déduit CB' = CB'1 = CB. Ainsi, les couleurs ne sont pas modifiées dans la zone Z12.

Dans le second quadrant Q2 montré à la Fig. 3B, les signaux CR et CB sont respectivement positif et négatif, c'est-à-dire CR $\geq$ 0 $\geq$ CB, ce qui implique CB'1 = CB. Pour examiner CB'2, le second quadrant est divisé en deux zones Z21 et Z22 symétriques par rapport à un second axe bissecteur défini par CR = -CB.

La zone Z21 est définie par CB $\geq$ -CR, ce qui implique CB'2 = -CR et CB'1 $>$ ; CB'2 ; il en résulte que CB' = CB'1 = CB. La zone Z22 est définie par CB $\leq$ -CR, ce qui implique CB'2 = CB et donc CB'1 = CB'2 ; il en résulte que CB' = CB. Ainsi dans les deux zones Z21 et Z22 et donc dans le second quadrant Q2, les couleurs ne sont pas modifiées.

Dans le troisième quadrant Q3 montré à la Fig. 3C, les signaux CR et CB sont tous deux négatifs, et par suite , -CR $\geq$ 0 $\geq$ CB ce qui implique CB'2 = CB. Pour examiner CB'1, le troisième quadrant est divisé en deux zones Z31 et Z32 symétriques par rapport au premier axe bissecteur CR = CB.

La zone Z31 est définie par CB $\leq$ CR, et on en déduit CB'1 = CB, et donc CB' = CB. La zone Z32 est définie CB $\geq$ CR, et on en déduit CB'1 = CR ; comme CB'2 = CB $\geq$ CR = CB'1, il en résulte que CB' = CB'2 = CB. Ainsi dans les deux zones Z31 et Z32 et donc dans le troisième quadrant Q3, les couleurs ne sont pas modifiées.

Le quatrième quadrant Q4 montré à la Fig. 3D correspond à des signaux CR et CB respectivement négatif et positif, ce qui implique CR $\leq$ 0 $\leq$ CB et par suite CB'1 = CR. Pour examiner CB'2, le quatrième quadrant est divisé en deux zones Z41 et Z42 symétriques par rapport au second axe bissecteur CR = -CB.

La zone Z41 est définie par CB $\leq$ -CR, ce qui implique CB'2 = CB. Dans ce cas CB'2 = CB $\geq$ CR = CB'1, et on en déduit CB' = CB'2 = CB. Les couleurs ne sont pas modifiées dans la zone Z41.

La zone Z42 est définie par CB $\geq$ -CR, ce qui implique CB'2 = -CR. Comme CB'1 = CR $\leq$ 0 $\leq$ -CR = CB'2, on a CB' = CB'2 = -CR. Les couleurs dans cette seconde zone Z42 du quadrant Q4 sont modifiées. Ainsi un point image A1 de coordonnées $CB_{A1}$ et $CR_{A1}$ dans la zone Z42 est transformé en un point A1' de coordonnées CB'$_{A1}$ = -$CR_{A1}$ et $CR_{A1}$. Dans la zone Z42, un point bleu est débleui et vire au bleu cyan, dit également bleu vert, et par suite le débleuissage est partiel.

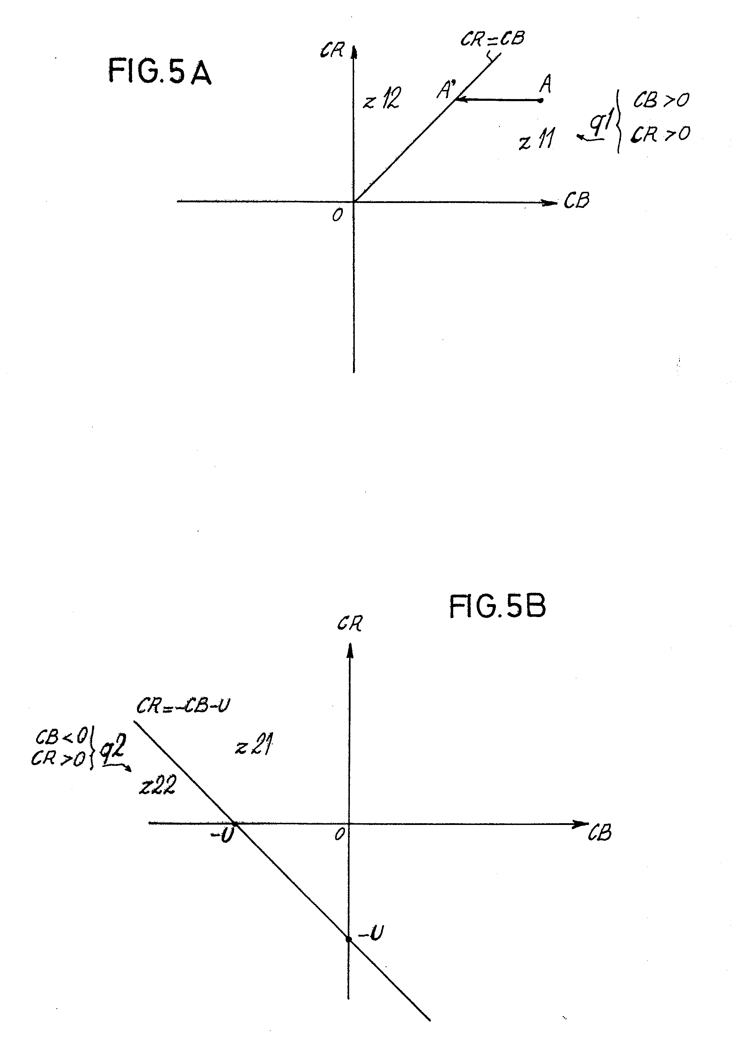

Le débleuissage obtenu par le débleuisseur 6 montré à la Fig. 2 est résumé dans la Fig. 4. Des points images appartenant à la seconde Z12 du premier quadrant Q1, au second et troisième quadrants Q2 et Q3, et à la première zone Z41 du quatrième quadrant Q4 et pour lesquels CB $\leq$ CR ont leurs couleurs inchangées, et des points images appartenant à la première zone Z11 du premier quadrant Q1 et à la seconde zone Z42 du quatrième quadrant Q4 et pour lesquels CB $\geq$ CR sont débleuis partiellement. L'effet de débleuissage n'intervient que dans une zone restreinte Z11 + Z42 du plan de chrominance dans laquelle le second signal de chrominance reçu CB est supérieur à la valeur absolue du premier signal de chrominance reçu CR ; seules les teintes bleues dans cette zone Z11 + Z42 sont affectées.

Selon une seconde réalisation de l'invention visant à améliorer le résultat de la première réalisation décrite ci-dessus, on recherche à débleuir totalement, et non partiellement, l'image composite F + P avant incrustation, c'est-à-dire à annuler la composante primaire bleue B dans cette image composite pour une couleur bleue saturée à 100 % pouvant constituer le fond F.

On se réfère dans la suite, à titre d'exemple, au standard de télévision en couleurs défini par la norme technique N 10 de l'UER (Union Européenne de Radiodiffusion), 1985, Bruxelles, et comprenant les signaux d'origine suivants :
- un signal de luminance ;
$$Y = L_R R + L_V V + L_B B$$
où R, V et B désignent les composantes primaires rouge, verte et bleue d'un point image trichromatique et $L_R = 0,299$, $L_V = 0,587$ et $L_B = 0,114$ sont des facteurs de luminance dont la somme est égale à 1 ;
- deux signaux de chrominance rouge et bleu :
$$CR = C_R(R - Y)$$
$$CB = C_B(B - Y)$$
où $C_R = 0,713$ et $C_B = 0,564$ sont des facteurs de chrominance.

De la dernière relation de chrominance est déduite la composante primaire bleue
$$B = (CB/0,564) + Y.$$

Pour une couleur bleue saturée à 100 %, indiquée par l'indice b, les composantes primaires sont :
$$R_b = 0 ; V_b = 0 \text{ et } B_b$$
Les quatres relations ci-dessus s'écrivent donc :
$$Y_b = 0,114 B_b$$
$$CR_b = -0,713 Y_b$$
$$CB_b = 0,564(B_b - Y_b), \text{ soit } CB_b = 0,4997 B_b$$
$$B_b = (CB_b/0,564) + Y_b, \text{ soit } B_b = (CB_b/0,564) + 0,114 B_b.$$

Pour obtenir un débleuissage complet, il faut que le signal $CB'_b$ sortant du débleuisseur corresponde à la composante primaire bleue $B'_b$ tendant vers la valeur nulle. Dans ce cas, $CR_b$ et $CB_b$ sont respectivement négatif et positif, et les comparaisons s'effectuent dans le quatrième quadrant Q4 montré à la Fig. 3D. La première comparaison réalisée par le comparateur 61 donne un résultat $CB'1_b = CR_b \leq 0$ toujours égal ou inférieur à celui $0 \leq CB'2_b = CB_b$, ou $= -CR_b$, de la seconde comparaison réalisée par le comparateur 62. Le troisième comparateur 63 sélectionnant la plus grande amplitude parmi $CB'1_b$ et $CB'2_b$, seul le résultat de la seconde comparaison $CB'_b = CB'2_b$ est à examiner. La dernière des quatres relations définies ci-dessus $B'_b = (CB'_b/0,564) + Y_b$ s'écrit pour $B'_b = 0$ :
$$(CB'_b/0,564) = -Y_b.$$

Cependant, comme le signal de luminance $Y_b$ est toujours positif par définition, et puisque $CB'_b = CB'2_b$ est toujours positif, l'annulation de la composante bleue $B'_b$ est impossible.

Selon la seconde réalisation, la seconde comparaison $CB \leq -CR$ est remplacée par la comparaison $CB \leq -CR-U$, où U est une constante positive afin d'obtenir $CB'_b < 0$, et donc l'annulation de la composante bleue $B'_b$. Dans ce cas, la limite supérieure de CB'2 est : $CB'2 = -CR-U$, et pour une couleur bleue saturée, on obtient :
$$CB'_b = -CR_b - U,$$
et de $CB'_b = -0,564 Y_b$
et $CR_b = -0,713 Y_b$,
on en déduit la constante :
$$U = +0,564 Y_b + 0,713 Y_b, \text{ soit } U = 1,277 Y_b.$$

Pour une mire de barre pour laquelle la composante bleue $B_b = 0,700$ Volt est saturée à 100 %, on obtient :
$$U = 1,277(0,114 \times 0,7) = 0,102 \text{ Volt.}$$

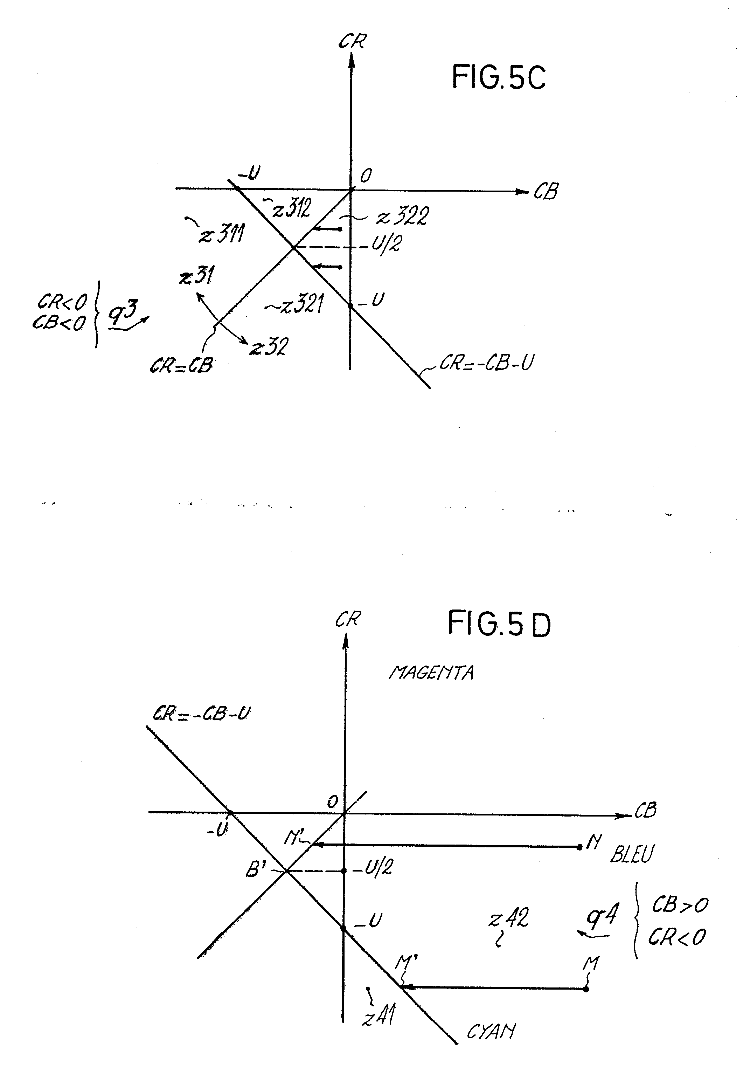

Afin de mieux comprendre cette seconde réalisation par rapport à la première, l'amélioration du débleuissage est analysée en référence aux Figs. 5A, 5B, 5C et 5D montrant les quatres quadrants du système de coordonnées de chrominance, désignés par q1 à q4. On notera que, vis-à-vis de la première réalisation, la seconde comparaison selon la seconde réalisation est exprimée par les relations suivantes :
si $CB \leq -CR-U$ alors $CB'2 = CB$, et
si $CB > -CR-U$ alors $CB'2 = -CR-U$.

Dans le premier quadrant q1 montré à la Fig. 5a, on a $CB'2 = -CR-U$ puisque $CB \geq 0 > -CR-U$. Comme dans le quadrant Q1, le quadrant q1 est divisé en deux zones $z11 = Z11$ et $z12 = Z12$ par l'axe bissecteur CR = CB pour examiner CB'1. Les résultats de cet examen sont identiques à celui dans le quadrant Q1, c'est-à-dire dans la zone z11, on a $CB' = CB'1 = CR$ et les points images dans cette zone sont débleuis, et dans la zone z12, on a $CB' = CB'1 = CB$ et les couleurs ne sont pas modifiées.

Dans le second quadrant q2 montré à la Fig. 5B, on a $CB \leq CR$ et donc $CB'1 = CB$. Pour examiner CB'2, le second quadrant q2 est divisé en deux zones z21 et z22 séparées par un axe défini par $CR = -CB-U$.

La zone z21 est définie par $CB \geq -CR-U$ ce qui implique $CB'2 = -CR-U$. Comme dans cette zone, on a $CB'2 = -CR-U < CB'1 = CB$, il en résulte que $CB' = CB'1 = CB$. Dans la zone z22, on a $CB \leq -CR-U$, ce qui implique $CB'2 = CB$ ; puisque $CB'2 = CB = CB'1$, alors $CB' = CB$. Ainsi, dans le quadrant q2, comme dans le quadrant Q2, les couleurs ne sont pas modifiées.

Le troisième quadrant q3 montré à la Fig. 5C est défini par $CB \leq 0$ et $CR \leq 0$.

Le quadrant q3 est divisé par le premier axe bissecteur CR = CB en deux zones z31 et z32 pour examiner CB'1. La zone z31 est définie par $CB \leq CR$ ce qui implique $CB'1 = CB$, et la zone z32 est définie par $CB \geq CR$, ce qui implique $CB'1 = CR$.

Pour examiner CB'2 dans le quadrant q3, l'axe d'équation $CR = -CB-U$ partage la zone z31 en deux sous-zones z311 et z312, et la zone z32 en deux sous-zones z321 et z322.

Dans la zone z311 définie par $CB \leq CR$ et $CB \leq -CR-U$, on a $CB'2 = CB$. Puisque

$CB'1 = CB = CB'2$, il en résulte que $CB' = CB$.

Dans la zone $z312$ définie par $CB \leqq CR$ et $CB \geqq -CR\ -U$, on a $CB'2 = -CR\ -U$. Puisque $CB'1 = CB \geqq -CR\ -U = CB'2$, on en déduit $CB' = CB'1 = CB$.

Dans la zone $z321$ définie par $CB \geqq CR$ et $CB \leqq -CR\ -U$, on a $CB'2 = CB$. Puisque $CB'1 = CR \leqq CB = CB'2$, on en déduit $CB' = CB'2 = CB$.

Dans la dernière zone $z322$ du quadrant $q3$ défini par $CB \geqq CR$ et $CB \geqq -CR\ -U$, on a $CB'2 = -CR\ -U$ et $CB'1 = CR$. Si on a $CB'2 >; CB'1$, c'est-à-dire $CR <; -U/2$, alors $CB' = CB'2 = -CR\ -U$. Par contre, si $CB'2 <; CB'1$, c'est-à-dire si $CR >; -U/2$, alors $CB' = CB'1 = CR$.

Ainsi, dans les zones $z311$, $z312$ et $z321$, les couleurs ne sont pas modifiées, et dans la zone $z322$, il y a altération des couleurs, mais cette altération est faible et concerne des points-images faiblement colorés.

Le quatrième quadrant $q4$ correspond à $CB \geqq 0$ et $CR \leqq 0$, et donc $CB \geqq CR$, ce qui implique $CB'1 = CR$. Pour examiner $CB'2$, le quadrant $q4$ est divisé en deux zones $z41$ et $z42$ par l'axe d'équation $CR = -CB\ -U$.

Dans la zone $z41$ définie par $CB \leqq -CR\ -U$, on a $CB'2 = CB$. Puisque $CB'2 = CB >; CR = CB'1$, on en déduit $CB' = CB'2 = CB$. Les couleurs ne sont donc pas modifiées dans la zone $z41$.

Dans la zone $z42$ définie par $CB \geqq -CR\ -U$, on a $CB'2 = -CR\ -U$. Si on a $CB'2 >; CB'1$, c'est-à-dire $-CR\ -U >; CR$, soit $CR <; -U/2$, un point M dans la zone $z42$ de coordonnées telles que $CB$ et $CR <; -U/2$ est transformé en un point M' de coordonnées telles que $CB' = CB'2 = -CR\ -U$ et $CR' = CR$, comme montré à la Fig. 4D. Si on a $CB'2 <; CB'1$, c'est-à-dire $CR >; -U/2$, un point N dans la zone $z42$ de coordonnées telles que $CB$ et $CR >; -U/2$ est transformé en un point N' de coordonnées telles que $CB' = CB'1 = CR \leqq 0$ et $CR' = CR$, comme montré à la Fig. 4D. Ainsi dans la zone $z42$, les couleurs sont modifiées, les bleu cyan représentés par des points M deviennent des cyans représentés par des points M', et les bleus pratiquement purs représentés par des points N deviennent des points décolorés N' grâce à une valeur négative de $CB'$.

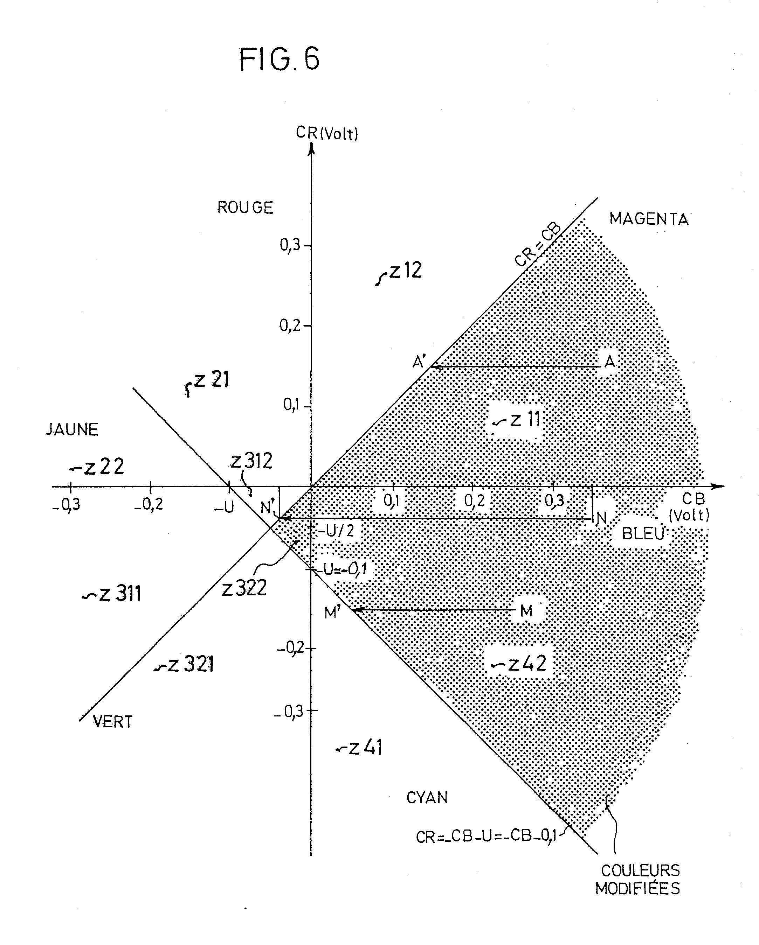

La Fig. 6 résume les différentes relations colorimétriques analysées dans les quatres quadrants $q1$ à $q4$ pour le standard de télévision de la seconde réalisation défini ci-dessus, selon lequel la tension prédéterminée positive U est égale à 0,102 Volt. Les couleurs sont modifiées seulement dans les zones $z11$, $z322$ et $z42$, c'est-à-dire seules les couleurs de teinte bleutée sont modifiées ; les bleu magenta virent au magenta, les bleu purs au noir, et les bleu cyan au cyan. L'ensemble des zones $z11$, $z322$, et $z42$ dans lesquelles les couleurs sont modifiées peut être défini par rapport à l'axe $CR = -U/2$ en des premier et second sous-ensembles. Dans le premier sous-ensemble au-dessus de l'axe $CR = -U/2$, le premier signal de chrominance reçu CR est à la fois inférieur au second signal de chrominance reçu CB et supérieur à $-U/2$, et le troisième signal de comparaison produit $CB'$ est égal à CR. Dans le second sous-ensemble en dessous de l'axe $CR = -U/2$, le premier signal de chrominance reçu CR est à la fois supérieur à $-CB\ -U$ et inférieur à $-U/2$,

et le troisième signal de comparaison produit $CB'$ est égal à $-CR\ -U$.

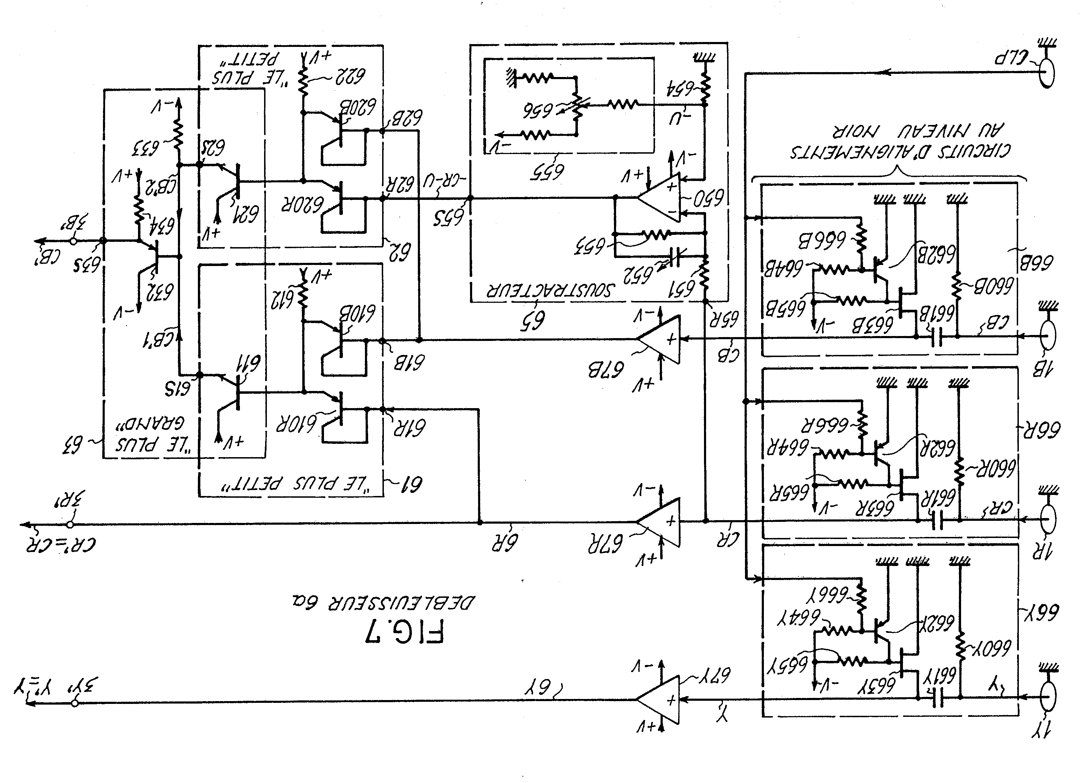

En pratique, la seconde réalisation du débleuisseur $6a$ peut être conforme à la Fig. 7. Dans cette Fig. 7, on retrouve les trois comparateurs 61, 62 et 63, et l'inverseur analogique 64 est remplacé par un soustracteur analogique 65.

Selon cette réalisation pratique, la borne d'entrée $1Y$ du déblouisseur $6a$ est reliée à l'entrée $3Y'$ du circuit à gain variable $3Y$ à travers un circuit d'alignement au niveau noir $66Y$ et un amplificateur non-inverseur d'adaptation $67Y$ ; la borne d'entrée $1R$ du débleuisseur $6a$ est reliée à l'entrée $61R$ du comparateur 61 et l'entrée $3R'$ du circuit à gain variable $3R$ à travers un circuit d'alignement au niveau noir $66R$ et un amplificateur non-inverseur d'adaptation $67R$, et à une entrée $65R$ du soustracteur 65 à travers le circuit $66R$ ; de même, la borne d'entrée $1B$ du débleuisseur $6a$ est reliée aux autres entrées $61B$ et $62B$ des comparateurs 61 et 62 à travers un circuit d'alignement au niveau noir $66B$ et un amplificateur non-inverseur d'adaptation $67B$.

Les circuits d'alignement au niveau noir $66Y$, $66R$ et $66B$, dits également circuits de clamp, sont identiques et sont classiques. Chacun des circuits $66Y$, $66R$ et $66B$ comprend en entrée, un circuit d'adaptation d'impédance à un câble transmettant le signal de luminance Y, respectivement de chrominance CR, CB via la borne d'entrée $1Y$, $1R$ et $1B$. Le circuit d'adaptation d'impédance est composé d'une résistance de dérivation $660Y$, $660R$, $660B$, ayant une valeur ohmique égale à l'impédance caractéristique du câble, typiquement de 75 Ohms, et d'un condensateur de couplage $661Y$, $661R$, $661B$. L'alignement au niveau noir égal à 0 Volt est réalisé dans chacun des circuits $66Y$, $66R$ et $66B$ par un circuit de commutation comprenant un transistor bipolaire PNP $662Y$, $662R$, $662B$ et un transistor à effet de champ $663Y$, $663R$, $663B$. La base de transistor $662Y$, $662R$, $662B$ et la grille du transistor $663Y$, $663R$, $663B$ sont respectivement reliées à travers deux résistances de polarisation $664Y$, $664R$, $664B$ et $665Y$, $665R$, $665B$ à une borne d'alimentation négative $-V$. Dans la Fig. 7, $-V$ et $V$ désignent deux tensions d'alimentation opposées, typiquement égales à -12 Volts et +12 Volts. La base du transistor $662Y$, $662R$, $662B$ est reliée à travers une résistance $666Y$, $666R$, $666B$ à une borne d'entrée CLP recevant des impulsions d'alignement au niveau noir, synchrones avec des impulsions de synchronisation de ligne du standard de télévision. L'émetteur du transistor $662Y$, $662R$, $662B$ et la source du transistor $663Y$, $663R$, $663B$ sont reliés à une borne de référence portée à 0 Volt. Le drain du transistor $663Y$, $663R$, $663B$ est relié à une armature du condensateur de couplage $661Y$, $661R$, $661B$ et à l'entrée de l'amplificateur $67Y$, $67R$, $67B$.

Le soustracteur 65 est organisé autour d'un amplificateur opérationnel 650 fonctionnant en inverseur-soustracteur. L'entrée inverse (-) de l'amplificateur 650 est reliée à l'entrée $65R$ à travers une résistance 651, afin d'inverser la tension CR en $-CR$. Un circuit de contre-réaction à condensateur 652 et résistance 653 parallèles est connecté entre la sortie et l'entrée inverse de l'amplificateur 650. L'entrée directe (+) de l'amplificateur est reliée à la borne de référence à 0 Volt à travers une résistance 654, et à un pont diviseur de tension 655 entre 0 Volt et -V = -12 Volts. Le pont diviseur 655 comprend un potentiomètre 656 pour le réglage de la tension -U. Les tensions -CR et -U sont additionnées dans l'amplificateur 650.

Chacun des premier et second comparateurs 61 et 62 est destiné à sélectionner le signal ayant la plus petite amplitude parmi deux signaux entrants CR et CB, -CR-U et CB et est analogue à une "porte ET analogique". Chaque comparateur 61, 62 comprend en entrée, deux diodes 610R et 610B, 620R et 620B sous la forme de transistors bipolaires PNP à base et collecteur reliés, et en sortie, un transistor bipolaire NPN 611, 621. Dans le premier comparateur 61, les entrées 61R et 61B relient les sorties des amplificateurs respectifs 67R et 67B aux cathodes des diodes 610R et 610B, tandis que dans le second comparateur 62, les entrées 62R et 62B sont reliées respectivement aux sorties de l'amplificateur-soustracteur 650 et de l'amplificateur non inverseur 67B, ainsi qu'aux cathodes des diodes 620R et 620B. Dans chacun des comparateurs 61 et 62, les anodes des diodes 610R et 610B, 620R et 620B sont reliées à la base du transistor 611, 621 et à la borne +V à travers une résistance de polarisation 612, 622. Les collecteurs des transistors 611 et 621 sont portés à la tension +V, et les émetteurs de ces transistors constituent les bornes de sortie 61S et 62S des comparateurs 61 et 62.

Par exemple, dans le comparateur 61, si le signal CR est plus petit que le signal CB, la diode 610R est passante et la diode 610B est bloquée ; le transistor de sortie 611 compense la tension de polarisation de la diode passante 610R et transmet le signal CB'1 = CR.

Le troisième comparateur 63 est destiné, à l'inverse des comparateurs 61 et 62, à sélectionner la plus grande amplitude parmi les deux signaux CB'1 et CB'2, et est analogue à "une porte OU analogique". Le comparateur 63 comprend deux transistors d'entrée qui sont constituées par les transistors de sortie 611 et 621 des comparateurs 61 et 62, et un transistor de sortie PNP 632. Les émetteurs des transisotrs 611 et 621 sont reliés à la base du transistor 632 et sont polarisés à -V à travers une résistance 633. Le collecteur du transistor 632 est polarisé directement -V. L'émetteur du transistor 632 est polarisé à +V à travers une résistance 634 et constitue la borne de sortie 63S du comparateur 63 reliée à l'entrée 3B' du circuit à gain variable 3B.

Par exemple, lorsque le premier signal de comparaison CB'1 est plus grand que le second signal de comparaison CB'2, le transistor d'entrée 611 est passant tandis que l'autre transistor d'entrée 621 est bloqué ; le transistor de sortie 632 compense la tension base-émetteur du transistor passant 611 et transmet le signal CB' = CB'1.

Bien que l'on ait supposé dans les réalisations décrites précédemment que les signaux composants Y, CR, CB, et 1YD, 1RD, 1BD soient analogiques, le traitement de tels signaux vidéo sous forme numérique pour obtenir une décoloration du fond mettant en oeuvre les opérations selon l'invention décrites ci-dessus, entre également dans l'objet de la présente demande de brevet. Dans ce cas les opérations d'inversion, de soustraction et de selections de la plus petite amplitude de deux signaux et de la plus grande amplitude de deux signaux sont effectuées par des circuits numériques remplaçant l'inverseur 64, l'inverseur-soustracteur 65 et les comparateurs 61, 62 et 63. Par exemple, le signal de luminance Y et les signaux de chrominance CR et CB sont des signaux numériques de la famille 4:2:2 définie dans l'avis 601 du CCIR (Comité Consultatif International des Radiocommunications), 1982 et dans le rapport technique 3246-F de l'UER, Bruxelles, Août 1983. Pour cette famille, la fréquence d'échantillonnage du signal de luminance est égale au double de la fréquence d'échantillonnage de chaque signal de chrominance, et trois échantillons des signaux de luminance et de chrominance sont transmis simultanément dans trois bus respectifs à huit fils parallèles chacun.

## Revendications

1- Dispositif de décoloration de fond pour système d'incrustation d'images de télévision en couleurs, recevant des premier et second signaux de chrominance (CR, CB) correspondant à une image composite constituée par une image d'avant-scène (P) évoluant devant un fond (F), ledit fond (F) ayant une couleur prépondérante (B) associée au second signal de chrominance (CB), caractérisé en ce qu'il comprend des moyens (6B) pour produire un troisième signal de chrominance (CB') égal à la valeur absolue du premier signal de chrominance (CR) lorsque le second signal de chrominance (CB) est supérieur à la valeur absolue du premier signal de chrominance (CR), et égal au second signal de chrominance (CB) lorsque le second signal de chrominance (CB) est inférieur ou égal à la valeur absolue du premier signal de chrominance (CR).

2- Dispositif conforme à la revendication 1, caractérisé en ce que les moyens pour produire (6B) comprennent des premiers moyens de comparaison (61) recevant les premier et second signaux de chrominance (CR, CB) pour produire un premier signal de comparaison (CB'1) égal au plus petit des deux signaux de chrominance, des moyens inverseurs (64) pour produire un signal (-CR) opposé au premier signal de chrominance (CR), des seconds moyens de comparaison (62) recevant ledit signal opposé (-CR) et le second signal de chrominance (CB) pour produire un second signal de comparaison (CB'2) égal au plus petit du signal opposé et du second signal de chrominance, et des troisièmes moyens de comparaison (63) reliées aux premiers et seconds moyens de comparaison (61, 62) pour produire un troisième signal de comparaison

(CB') égal au plus grand des premier et second signaux de comparaison (CB'1, CB'2) et constituant ledit troisième signal de chrominance.

3- Dispositif de décoloration de fond pour système d'incrustation d'images de télévision en couleurs, recevant des premier et second signaux de chrominance (CR, CB) correspondant à une image composite constituée par une image d'avant-scène (P) évoluant devant un fond (F), ledit fond (F) ayant une couleur prépondérante (B) associée au second signal de chrominance (CB), caractérisé en ce qu'il comprend des moyens (6B) pour produire un troisième signal de chrominance (CB') égal au premier signal de chrominance (CR) lorsqu'à la fois le premier signal de chrominance (CR) est inférieur au second signal de chrominance (CB) et supérieur à l'opposé de la moitié d'une tension prédéterminée positive (U), et égal à l'opposé (-CR-U) de la somme du premier signal de chrominance (CR) et de la tension prédéterminée (U) lorsqu'à la fois le premier signal de chrominance (CR) est supérieur à l'opposé (-CB-U) de la somme du second signal de chrominance (CB) et de la tension prédéterminée (U) et inférieur à l'opposé de la moitié de la tension prédéterminée (U), et égal au second signal de chrominance (CB) lorsque le premier signal de chrominance (CR) est supérieur au second signal de chrominance (CB) et/ou est inférieur à l'opposé (-CB-U) de la somme du second signal de chrominance (CB) et de la tension prédéterminée (U).

4- Dispositif conforme à la revendication 3, caractérisé en ce que les moyens pour produire (6B) comprennent des premiers moyens de comparaison (61) recevant les premier et second signaux de chrominance (CR, CB) pour produire un premier signal de comparaison (CB'1) égal au plus petit des deux signaux de chrominance, des moyens soustracteurs (65) pour produire un signal de somme (-CR-U) égal à l'opposé de la somme du premier signal de chrominance (CR) et à ladite tension prédéterminée positive (U), des seconds moyens de comparaison (62) recevant ledit signal de somme (-CR-U) et le second signal de chrominance (CB) pour produire un second signal de comparaison (CB'2) égal au plus petit du signal de somme et du second signal de chrominance, et des troisièmes moyens de comparaison (63) reliés aux premiers et seconds moyens de comparaison (61, 62) pour produire un troisième signal de comparaison (CB') égal au plus grand des premier et second signaux de comparaison (CB'1, CB'2) et constituant ledit troisième signal de chrominance.

5- Dispositif conforme à la revendication 4, caractérisé en ce que les moyens de soustraction (65) comprennent des moyens (655, 656) pour régler la tension prédéterminée (U), de préférence à une valeur sensiblement égale à 0,1 Volt.

6- Dispositif conforme à l'une quelconque des revendications 2, 4 et 5, caractérisé en ce que les troisièmes moyens de comparaison (63) comprennent en commun avec chacun des premiers et seconds moyens de comaraison (61, 62), un transistor (611, 621) ayant une première électrode (base) recevant les deux signaux (CR, CB ; -CR ou -CR-U, CB) à comparer dans les premiers, respectivement seconds moyens de comparaison à travers deux diodes (610R, 610B ; 620R, 620B), les deux transistors (611, 621) respectivement communs aux premiers et troisièmes moyens de comparaison et aux seconds et troisièmes moyens de comparaison ayant des secondes électrodes (émetteurs : 61S, 62S) reliés entre elles.

7- Dispositif conforme à l'une quelconque des revendications 1 à 6, caractérisé en ce qu'il comprend des premiers moyens (6Y) recevant un signal de luminance (Y) correspondant à ladite image composite pour retransmettre ledit signal de luminance (Y), et des seconds moyens (6R) recevant le premier signal de chrominance (CR) pour retransmettre ledit premier signal de chrominance (CR).

8- Dispositif conforme à la revendication 7, caractérisé en ce qu'il comprend des moyens (66Y, 66R, 66B) reliés à des entrées des premiers et seconds moyens pour retransmettre (6Y, 6R) et des moyens pour produire ledit troisième signal de chrominance (6B), pour aligner ledit signal de luminance (Y) et lesdits premier et second signaux de chrominance (CR, CB) à un niveau d'image noire.

0285494

FIG.1

0285494

# FIG.2

# FIG. 4

**FIG.3A**

**FIG.3B**

**FIG.3C**

**FIG.3D**

0285494

FIG.5 A

$z12$

$CR=CB$

A'  ← A

$z11$ $q1$ $\begin{cases} CB>0 \\ CR>0 \end{cases}$

O — CB

FIG.5B

CR

$CR=-CB-U$

$\begin{cases} CB<0 \\ CR>0 \end{cases}$ $q2$

$z21$

$z22$

$-U$ — O — CB

$-U$

FIG.5C

CR

CB

−U    0

~z312    z322

~z311    −U/2

z31

CR<0 } q3
CB<0

~z321    −U

CR=CB    z32

CR=−CB−U

FIG.5D

CR

MAGENTA

CR=−CB−U

0    CB

−U

N'    N    BLEU

B'    −U/2

−U    z42    q4 { CB>0
                   CR<0

M'    M

z41

CYAN

0285494

# FIG.6

FIG. 7
DEBLEUISSEUR 6a

CIRCUITS D'ALIGNEMENTS AU NIVEAU NOIR

SOUSTRACTEUR

"LE PLUS PETIT"

"LE PLUS GRAND"

"LE PLUS PETIT"

02854494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 81 (E-307)[1804], 10 avril 1985, page 58 E 307; & JP-A-59 212 089 (SONY K.K.) 30-11-1984 --- | 1,3 | H 04 N 9/75 |
| A | PATENT ABSTRACTS OF JAPAN, vol. 9, no. 123 (E-317)[1846], 28 mai 1985, page 128 E 317; & JP-A-60 10 893 (PIONEER K.K.) 21-01-1985 --- | 1 | |
| A | PATENT ABSTRACTS OF JAPAN, vol. 8, no. 39 (E-228)[1476], 21 février 1984, page 38 E 228; & JP-A-58 196 790 (NIPPON DENKI K.K.) 16-11-1983 ----- | 1,3 | |

DOMAINES TECHNIQUES RECHERCHES (Int. Cl.4)

H 04 N

Le présent rapport a été établi pour toutes les revendications

| Lieu de la recherche | Date d'achèvement de la recherche | Examinateur |
|---|---|---|
| LA HAYE | 14-06-1988 | PIGNIEZ T.J.P. |